# EUROPEAN PATENT APPLICATION

(11) **EP 2 774 515 A1**
(43) Date of publication of application: **10.09.2014**
(21) Application number: 14158005.0
(22) Date of filing: 06.03.2014
(51) Int. Cl.: A47J 37/07

(54) **Grill**

(30) Priority: 07.03.2013 SE 1300172
(71) Applicant: Lidab Sweden AB, 335 23 Gnosjö (SE)
(72) Inventor: Larsson, Anders, 335 93 ÅSENHÖGA (SE)
(74) Representative: Rosenquist, Per Olof

(57) **Abstract**

Barbecue grill (1) comprising a shell (11), which supports a heat source, and a grill grid (10) arranged in the shell (11) at a distance from the heat source. A linear actuator (12) is arranged concentrically in the shell (11), the grill grid (10) being concentrically arranged on said linear actuator (12), which admits raising and lowering, respectively, of the grill grid (10).

## Description

### Technical Field

The present invention relates to a barbecue grill comprising a shell, which supports a heat source, a grill grid arranged in the shell at a distance from the heat source.

### Background

There are a number of barbecue grills of different kinds in the market. One of the most common types of barbecue grills is a spherical barbecue grill. It has a hemispherical lower part, which is supported on legs, and a hemispherical upper part, which in active position rests on the lower part. The lower part has in its upper edge a rim extending outwards, onto which a barbecue grill grid rests when grilling. In this conventional spherical grill, the grill grid can only be arranged in one single height position above the heat source, i.e. on the outwardly extending rim at the upper edge of the lower part. The semispherical upper part also has, at its lower edge, a rim which extends beyond and rests on the rim of the lower part when grilling, i.e. when the hemispherical upper part is used as a cover.

When grilling, some kind of heat source is provided at the bottom of the lower hemispherical part, for example charcoal lumps or briquettes, which are ignited and generate heat. Often, it is difficult to supply the correct amount of fuel for the heat source so that the correct temperature is obtained for the specific food placed onto the grill grid when grilling. In case too little fuel is supplied it will take a long time for the grilled food to be ready-cooked, or in the worst case it will not be ready-cooked at all. This is because the heat emitted from the heat source is too low and/or because the food on the grill grid is at a too long distance from the heat source.

In case too much fuel is supplied the food will not be ready-cooked but instead it will get charred on the surface already before it is ready-cooked, and the reasons for this are because the heat generated by the heat source is too high and/or because the food is placed too close to the heat source.

### Summary of the Invention

One object of the present invention is to provide a barbecue grill with which the user easily can change the height adjustment for a grill grid in relation to a heat source.

This object is accomplished according to the present invention with a barbecue grill comprising a linear actuator arranged centrally in the shell, which actuator allows raising and lowering of the grill grid, respectively.

The linear actuator is an elongated threaded rod, which is rotatably arranged in a lower part of the barbecue grill. The elongated, threaded rod is designed with a self-braking thread.

The linear actuator has a length of L= L_{MAX}-H/2. The linear actuator is completely or partly surrounded by a covering, which is telescopic.

The grill grid is planar in its direction of propagation and has a circular peripheral form which runs alongside an inner side of the shell.

In the height propagation interval H the inner diameter of the grill in a horizontal direction is larger or equal to the diameter of the grill grid, i.e. D_{GRILL} ≥ D_{GRID}. The height propagation interval H is about 15 cm.

The shell of the barbecue grill is spherical and has a lower and an upper part designed as hemispheres.

### Short description of the drawings

The invention will now be described as an example with reference to the accompanying drawings, in which:
Fig. 1 shows a cross-sectional view straight from the side of the barbecue grill according to the invention,
Fig. 2 shows a cross-sectional view in perspective of the barbecue grill according to the invention, and
Fig. 3 shows a magnification according to the marking A in Fig. 1.

### Description of embodiments

In the following, embodiments will be described in detail. In the following description references will be used, such as upwards, downwards, to the side and these directional references refer to the inventive object being placed in its use position.

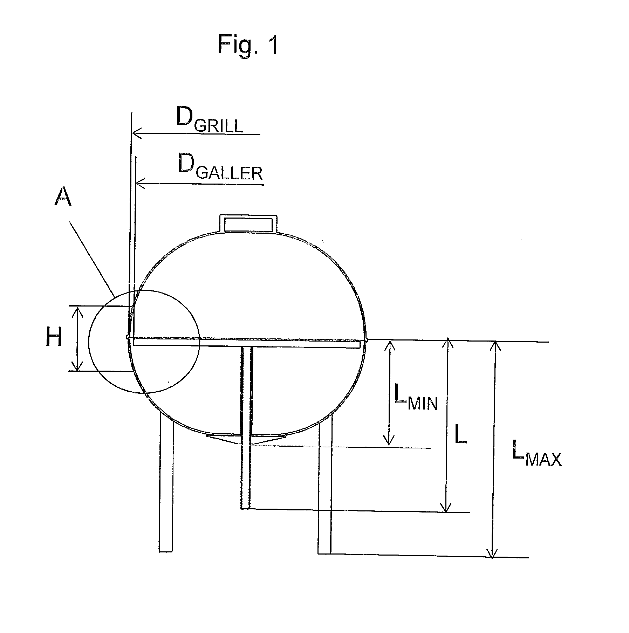

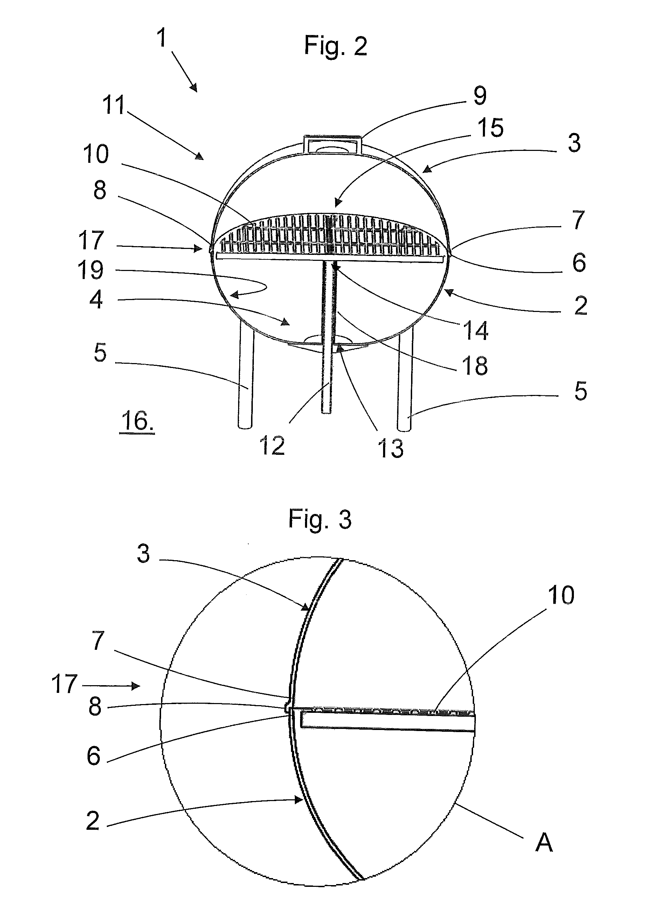

In Fig. 1 and 2 the grill according to the invention is shown in a straight cross-sectional view from the side and a cross-sectional view in perspective. The barbecue grill shown in the Figs. is a spherical grill, but it may have any configuration, such a grill designed as a cylindrical tube having a bottom.

The grill 1 has a shell 11 comprising a hemispherical lower part 2 and a hemispherical upper part 3. The geometrical form and size of the spherical propagation area of the grill 1 of the lower part 2 and the upper part 3 substantially correspond to each other. The hemispherical lower part 2, in use, supports a heat source arranged on a bottom 4 in the lower part 2. The hemispherical lower part 2 is supported and rests on one or several legs 5. The hemispherical upper part 3 rests in use on an upper edge 6 of the lower part 2, i.e. when the upper part 3 is used as a barbecue cover. The upper part 3 has a rim 8 in a lower edge 7. The rim 8 can advantageously be L-formed, which is illustrated in Fig. 3, and extends beyond, and rests on, the upper edge 6 of the lower part 2 when grilling. The purpose of the rim 8 is to align and maintain the upper part 3 on the lower part 2. The hemispherical upper part 3 advantageously also comprises handle 9, with which the upper part 3 can be lifted.

A grill grid 10 is arranged in the shell 11 at a distance from the heat source, which is arranged in the lower part 2. The grill grid 10 is arranged centrally in the shell 11 on a linear actuator 12. The linear actuator 12 is arranged centrally in the bottom 4 of the lower part 2. The linear actuator 12 allows raising and lowering, respectively, of the grill grid 10 in an active position, so that the grill grid 10 can be adjusted to be positioned at a suitable distance from the heat source for the supply of the required heat to the food to be grilled.

The linear actuator 12 is an elongate threaded rod or screw, which is rotatably arranged in the lower part 2 of the grill. The elongate threaded rod or screw is designed with a self-braking thread, e.g. a trapezoid thread, i.e. its pitch is large in relation to its diameter. The pitch for the threads of the elongate threaded rod depends on how large the lowering or raising of the grill grid 10 should be for each turn of the elongate threaded rod. Since the thread is self-braking the grill grid will maintain its adjusted position in the height direction also when the grill grid 10 is loaded with food to be grilled.

The lower part 2 of the grill 1 has a centered aperture 13 in its bottom 4, through which the elongate threaded rod protrudes. The elongate threaded rod can be rotatably mounted in a nut (not shown), which is permanently secured to bottom 4 of the lower part 2 and which permits turning of the elongate threaded rod for raising and lowering, respectively, of the grill grid 10. One alternative to the nut would be a sleeve, inside which is arranged a pin which cooperates with the thread.

One further alternative for obtaining the raising and lowering of the grill grid 10 is to provide a crank at the side of the linear actuator 12. The crank cooperates through a worm gear with the threaded rod and when the crank is turned this will result in raising and lowering, respectively, of the grill grid 10.

The grill grid 10 is arranged on an upper end 14 of the linear actuator 12. The grill grid 10 might be permanently mounted on the upper end 14 of the actuator 12, or can be releasable therefrom. In order to facilitate for the grill grid 10 to maintain a substantially horizontal positioning in its active position during grilling, the grill grid 10 might be supported by a bracing element 15. This bracing element 15 might for example form an X on which the grill grid 10 rests.

When adjusting the height of the grill grid 10, the linear actuator 12 with the grill grid 10 is turned around its axis of rotation, whereby the grill grid 10 is raised or lowered.

The linear actuator 12 might have a maximum length L_{MAX}, which equals the distance from a foundation 16, on which the legs 5 of the grill rest up to the parting line for the spherical grill, i.e. the contact surface 17 between the lower part 2 and the upper part 3. The shortest possible length of the linear actuator 12 is L_{MIN}, which equals the distance from the bottom 4 of the lower part 2 to an upper edge 6 of the lower par 2.

The maximum length L_{MAX} of the linear actuator 12 would only permit a raising of the grill grid 10 from the separating line of the grill 1, since the actuator 12 would hit against the foundation 16 in its bottom position, while the shortest possible length L_{MIN} of the linear actuator 12 only would allow a lowering of the grill grid 10 from the separating line of the spherical grill, since otherwise there would be a risk for the actuator 2 to be screwed off from the aperture 13. Therefore, the optimum length of the actuator 12 is somewhere between L_{MAX} and L_{MIN}, permitting both a raising and a lowering of the grill grid 10 in relation to the separating line of the grill 1.

The practicable height adjustment interval for the grill grid 10 is shown in Fig. 2 and is designated with H. Preferably, the linear actuator 112 has a length L, which corresponds to the maximum length L_{MAX} minus half the height adjustment interval H/2, i.e. L = L_{MAX} - H/2. As an example the possible height adjustment interval H may be about 15 cm.

The linear actuator 12 may be enclosed in a housing 18. The housing 19 may enclose the linear actuator 12 completely or partly. The housing 18 protects the linear actuator 12 from burned residues from charcoal and grill briquettes from entering the actuator 12 and impair its function or even completely put it out of operation. The housing 18 may comprise one or several parts. In the case, wherein the housing 18 comprises two or several parts, the housing 18 may comprise sleeves of different dimensions being movable one outside the other. Accordingly, the housing 18 may be telescopic. In the case with a telescopic housing 18, the parts constituting the housing have a total maximum length of L_{MIN} + H/2 and a minimum length of L_{MIN} - H/2.

A telescopic housing 18 might comprise at least two different parts, one upper part and one lower part, wherein the upper part may be locked in an upper end of the linear actuator 12 and the lower part can be mounted in the bottom 4 of the lower hemispherical part 2. The telescopic housing 18 permits protection of the linear actuator 12, when it is rotated in order to lower and raise, respectively, the grill grid 10 when operating the barbecue grill 1, since the telescopic housing 18 follows the grill grid 10 down and up, respectively, when lowering and raising, respectively, of the grill grid.

The grill grid 10 has a direction of propagation which extends in one plane and the grill grid 10 has a form which in its perimeter is circular. The circular perimeter of the grill grid 10 runs at a distance along an inner side 19 of the shell 11, which has a corresponding form in relation to the perimeter of the grill grid 10. Accordingly, the grill grid 10 has an outer diameter which is less than the largest inner diameter of the shell 11, seen in a horizontal direction.

The height adjustment interval H of the grill grid 10 is determined by the diameter D_{GALLER} of the grill grid 10, seen in a horizontal direction, whereby the grill grid 10 can be vertically adjusted, i.e. be raised and lowered to the extent when the inner diameter D_{GRILL} of the shell 11 is equally big or larger than the diameter D_{GALLER} of the grill grid 10, i.e. D_{GRILL} ≥D_{GALLER}. The height adjustment interval H will be large when the grill grid 10 diameter is small, but then the distance between the perimeter of the grill grid 10 and the inner side 10 of the shell 11 will be comparatively large, and food items placed on the grill grid 10 can easily fall down into the heat source during cooking, which is undesired. The inner side 19 of the shell 11 can thus act as an abutment for the food. In the same way the height adjustment interval H will be small if the diameter of the grill grid 10 is large.

In an alternative embodiment the shell might be designed as a cylinder having a bottom.

In an alternative embodiment the rim 8 might be designed as a protruding straight edge, extending perpendicularly out sideways from the lower edge 6 of the upper part 3. In this alternative embodiment, the lower part 2 might also be provided with an edge similar to an extending edge which extends perpendicularly out sideways from the upper edge 6 of the lower part 2.

In a further alternative embodiment the heat source is arranged above the grid 10, e.g. i the form of electric grill elements. Also in this case a vertically adjustable grill grid 10 according to the invention would be useful, since in its lowest position it will end up at a maximum distance from the heat source, and in its top position it will be closest to the heat source. Accordingly, a distance adjustment is possible also in this embodiment.

## Claims

1. Barbecue grill (1) comprising a shell (11) which supports a heat source, a grill grid (10) arranged in the shell (11) at a distance from the heat source on the upper end (14) of an elongate screw, which is rotatably and concentrically arranged in a centered aperture (13) in a lower part (2) of the shell (11), wherein the screw allows raising and lowering, respectively, of the grill grid (10), **characterized in that** a telescopic enclosure (18) encompasses the screw.

2. Barbecue grill according to claim 1, **characterized in that** the parts constituting the telescopic enclosure have a total maximum length of L_{MIN}+H/2 and a minimum length of L_{MIN}-H/2, wherein L_{MIN} is the distance from the bottom (4) of the lower part (2) to an upper edge (6) of the lower part (2) and H is the possible height adjustment interval of the grill grid (10).

3. Barbecue grill according to claim 1 or claim 2, **characterized in that** the elongate screw is designed with a trapezoid thread.

4. Barbecue grill according to any of the preceding claims, **characterized in that** the grill grid (10) is planar in its direction of propagation and has a circular peripheral form which runs along an inner side (19) of the shell (11).

5. Barbecue grill according to any of the preceding claims, **characterized in that** within the height adjustment interval H, the inner diameter of the shell (11) in a horizontal direction is larger than or equal to the diameter of the grill grid (10), i.e. D_{GRILL} ≥ D_{GALLER}.

6. Barbecue grill according to any of the preceding claims, **characterized in that** the height adjustment interval H of the grill grid (10) is about 15 cm.

7. Barbecue grill according to any of the preceding claims, **characterized in that** the shell (11) is spherical and has an upper and a lower part (2, 3) formed as hemispheres.

8. Barbecue grill according to any of the claims 1 - 6, **characterized in that** the shell is cylindrical and provided with a bottom.
